# EUROPÄISCHE PATENTSCHRIFT

(11) **EP 1 324 898 B1**
(45) Veröffentlichungstag und Bekanntmachung des Hinweises auf die Patenterteilung: **08.12.2004**
(21) Anmeldenummer: 01986649.0
(22) Anmeldetag: 09.10.2001
(51) Int. Cl.: B60R 13/02, F16B 2/20

(54) **VORRICHTUNG ZUR VERBINDUNG EINES TRÄGERS, INSBESONDERE EINES KAROSSERIETEILS EINES KRAFTFAHRZEUGES, MIT EINEM PLATTENELEMENT, INSBESONDERE EINER TÜR- ODER WANDVERKLEIDUNG**
DEVICE FOR CONNECTING A SUPPORT, ESPECIALLY A BODY PART OF A MOTOR VEHICLE, WITH A PANEL ELEMENT, ESPECIALLY A DOOR OR WALL PANELING
DISPOSITIF POUR RELIER UN SUPPORT, NOTAMMENT UNE PARTIE DE CARROSSERIE D'UNE AUTOMOBILE, A UN ELEMENT EN PLAQUE, NOTAMMENT A UN REVETEMENT DE PORTE OU DE PAROI

(30) Priorität: 10.10.2000 DE 20017376 U; 21.12.2000 DE 10064017
(43) Veröffentlichungstag der Anmeldung: 09.07.2003
(73) Patentinhaber: TRW Automotive Electronics & Components GmbH & Co. KG, 78315 Radolfzell (DE)
(72) Erfinder: KRAUS, Willibald, 67269 Grünstadt (DE)
(74) Vertreter: Eder, Christian, Dipl.-Ing.
(86) Internationale Anmeldenummer: PCT/DE2001/003829
(87) Internationale Veröffentlichungsnummer: WO 2002/030710

(56) Entgegenhaltungen:
- US-A- 4 568 215
- US-A- 5 236 272
- US-A- 5 319 839
- US-A- 6 039 523

## Beschreibung

Die Erfindung bezieht sich auf eine Vorrichtung zur Verbindung eines Trägers, insbesondere eines Karosserieteils eines Kraftfahrzeuges, mit einem Plattenelement, insbesondere einer Tür- oder Wandverkleidung, mit einem Verbindungselement mit an dem Plattenelement befestigbaren Oberteil und einem mit dem Träger verbindbaren Unterteil, wobei zwischen dem Oberteil und dem Unterteil ein mit Verrastungselementen versehener, halsförmig ausgebildeter Zwischenbereich vorgesehen ist, welcher ein in eine Trägeröffnung einlagerbares Eingriffsteil durchsetzt, nach dem Oberbegriff des Auspruchs 1, (gemäß US-A-6 039 523).

Weiterer Stand der Technik ist ein Verbindungselement, bei welchem der Zwischenbereich oberhalb des Trägers von einem Zwischenteil umgeben ist, welches mit den Verrastungselementen verriegelbar ist, wobei zwischen dem Zwischenteil und dem Eingriffsteil ein die Oberseite des Trägers beaufschlagendes Dichtelement angeordnet ist (DE 298 10 437 U1).

Weiterer Stand der Technik ist eine Verbindung zwischen einem Träger und einem Plattenelement, wobei der Eingriffsbereich des Oberteils aus zwei übereinander angeordneten durch einen Quersteg voneinander getrennten Taschen besteht DE 195 04 692 A1.

Darüber hinaus ist eine weitere Verbindung zwischen einem Träger und einem Plattenelement bekannt, bei welchem das Halteelement zwischen den beiden Flanschen einen dritten elastischen Flansch aufweist DE 297 18 487 U1.

Ausgehend von dem eingangs genannten Stand der Technik besteht die Aufgabe der vorliegenden Erfindung darin, eine Vorrichtung zur Verbindung eines Trägers mit einem Plattenelement zu schaffen, bei welchem eine genaue Abstimmung der Ein- und Abzugskräfte bei der Montage bzw. Demontage vorliegt; es soll also eine Feinabstimmung im Zusammenbau mit möglichst geringer Streuung der Kräfte gewährleistet sein.

Diese Aufgabe wird erfindungsgemäß mit den Merkmalen des Anspruchs 1 gelöst.

Hierdurch ergibt sich eine einfach aufgebaute Konstruktion, welche trotzdem bei der Vor- und Endmontage genaue Ein- und Abzugskräfte gewährleistet, so dass dadurch insgesamt die erfindungsgemäße Vorrichtung eine hohe Effektivität besitzt.

Vorteilhafte Weiterbildungen ergeben sich aus den Unteransprüchen.

Die Erfindung wird nachfolgend anhand eines in der Zeichnung dargestellten Ausführungsbeispiels näher beschrieben. In der Zeichnung zeigen:
- Fig. 1: eine schematische Seitenansicht der erfindungsgemäßen Vorrichtung im Zustand der Vormontage
- Fig. 2: einen Schnitt nach der Linie II, II in Fig. 1
- Fig. 3: eine Draufsicht auf die erfindungsgemäße Vorrichtung nach Fig. 1
- Fig. 4: ein Schnitt nach der Linie IIII, IIII in Fig. 1
- Fig. 5: eine Seitenansicht des Verriegelungsteils gemäß der Vorrichtung nach Fig. 1
- Fig. 6: eine Draufsicht auf das Verriegelungsteil nach Fig. 5
- Fig. 7 a, b, c: ein Verbindungselement in Seitenansicht, Draufsicht und im Mittelschnitt
- Fig. 8 a, b, c: ein Zwischenteil 15 in Seitenansicht, in Draufsicht und im Schnitt c-c
- Fig. 9 a, b, c: ein Dichtungselement in Seitenansicht, in Draufsicht und im Schnitt c-c
- Fig. 10 a, b, c: ein Eingriffsteil in Seitenansicht, in Draufsicht und im Schnitt c-c
- Fig. 11 a, b, c: eine Kappe in Seitenansicht, in Draufsicht und im Schnitt c-c
- Fig. 12: die erfindungsgemäße vormontierte Vorrichtung nach dem Einsetzen in eine Trägeröffnung in Seitenansicht
- Fig. 13: einen Schnitt nach der Linie XIII-XIII in Fig. 12
- Fig. 14: eine vergrößerte Darstellung Y nach Fig. 13 im Schnitt
- Fig. 15: die erfindungsgemäße Vorrichtung im Zustand der Endmontage E
- Fig. 16: eine Ansicht analog Fig. 15 nach dem Einsetzen der Vorrichtung in eine Trägeröffnung im Zustand der Endmontage
- Fig. 17: einen Mittelschnitt durch die endmontierte Vorrichtung nach Fig. 16
- Fig. 18: eine vergrößerte Darstellung X nach Fig. 17
- Fig. 19: eine Draufsicht auf die erfindungsgemäße Vorrichtung
- Fig. 20: einen Schnitt nach der Linie XX-XX nach Fig. 19
- Fig. 21: eine perspektivische Darstellung der erfindungsgemäßen Vorrichtung im Zustand der Endmontage.

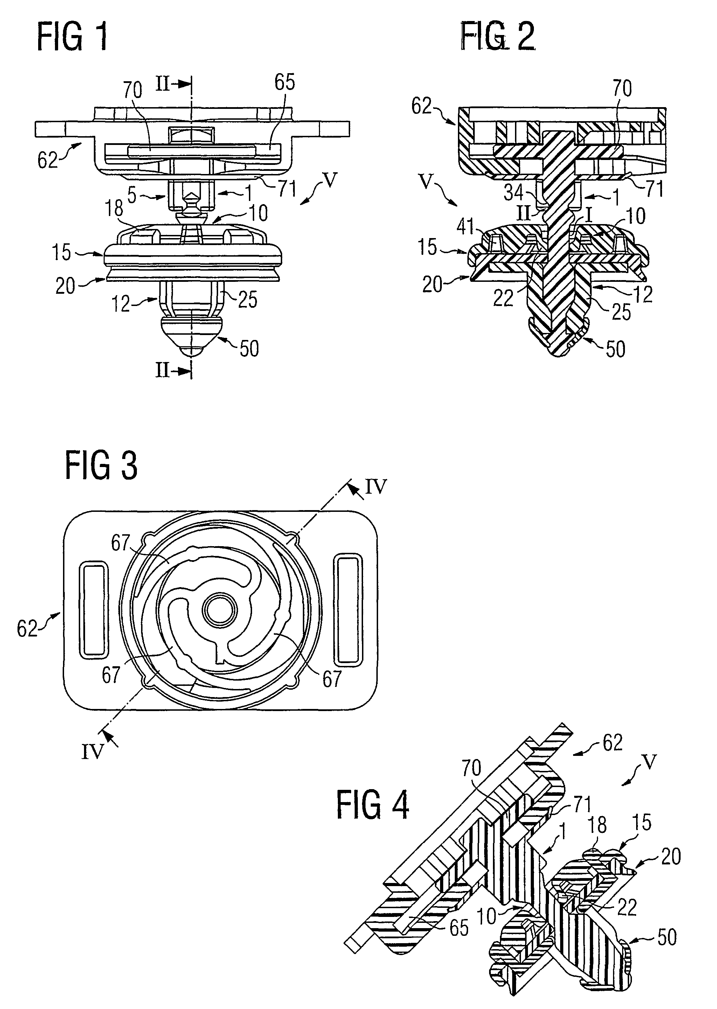

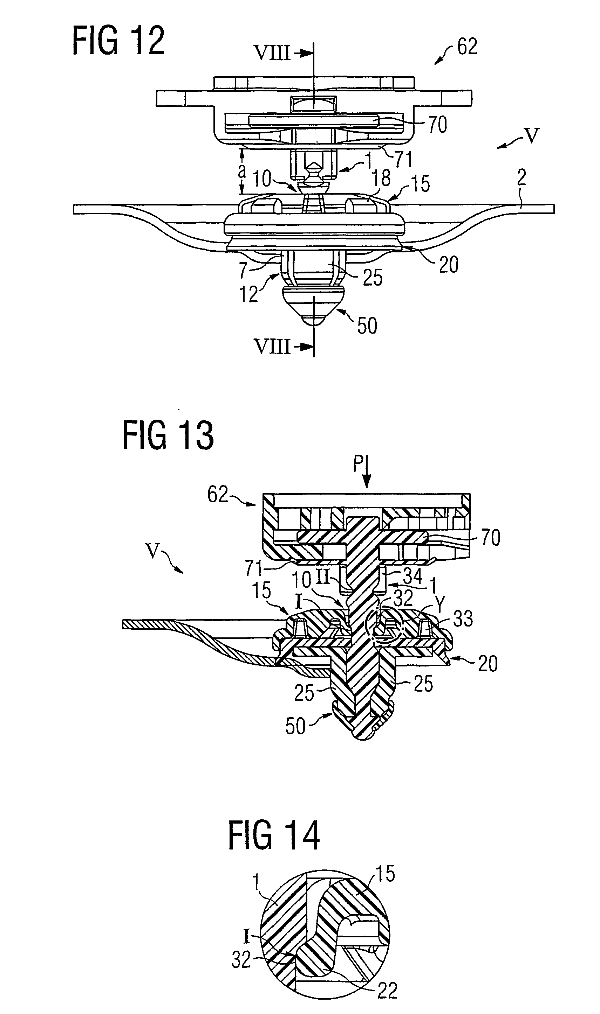

In Fig. 1 bis Fig. 3 ist die erfindungsgemäße Vorrichtung zur Verbindung eines in Fig. 12 dargestellten Trägers 2, insbesondere einem Karosserieteil eines Kraftfahrzeuges, mit einem nicht näher dargestellten Plattenelement, insbesondere einer Tür- oder Wandverkleidung offenbart. Die Vorrichtung ist aus Kunststoff hergestellt.

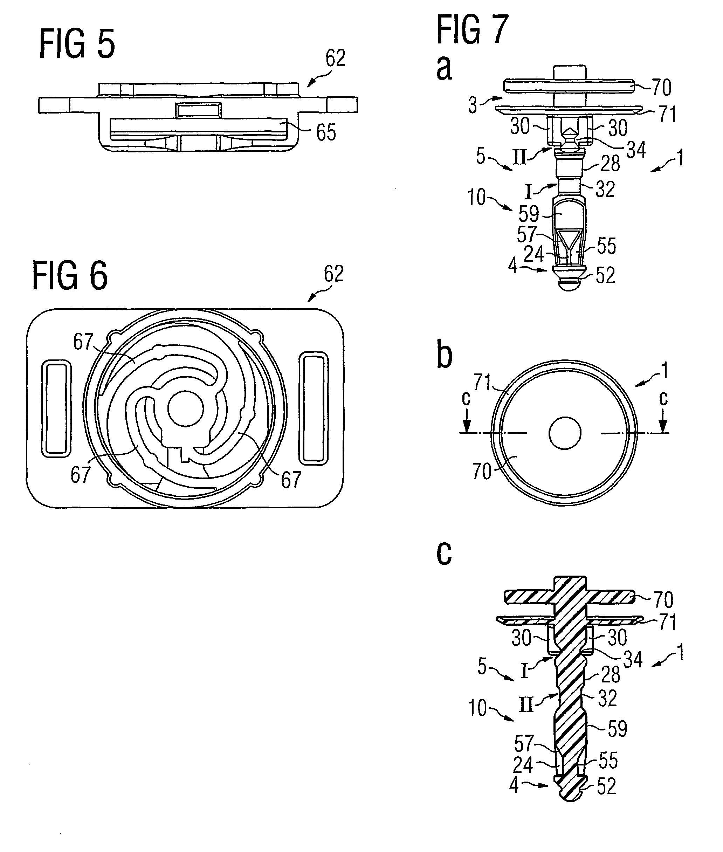

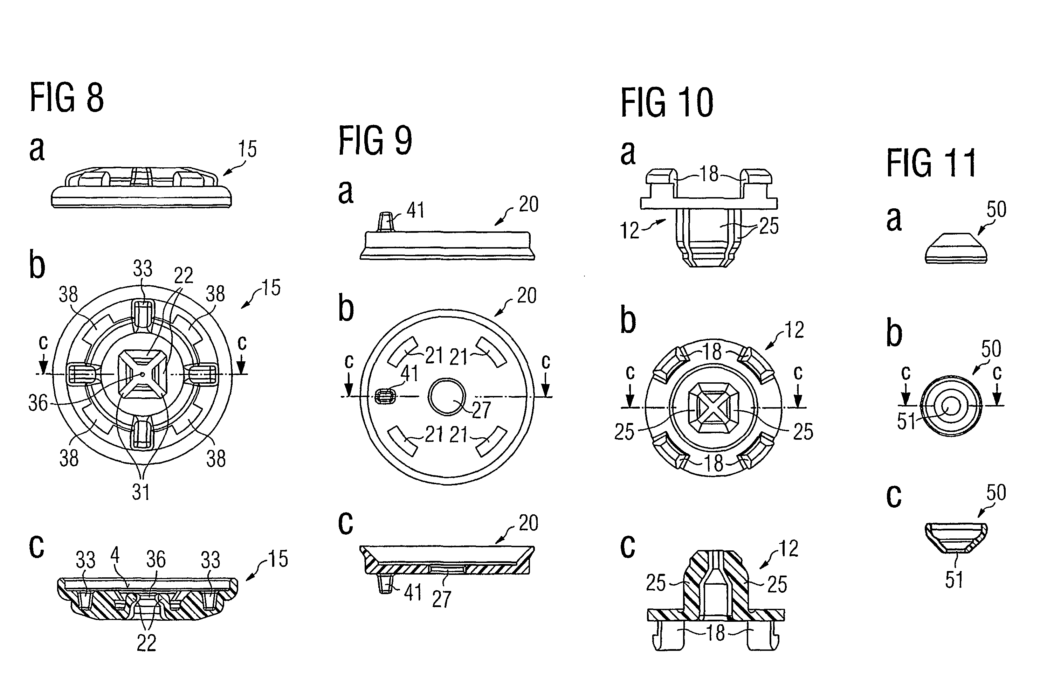

Die erfindungsgemäße Vorrichtung besteht im wesentlichen aus einem Verbindungselement 1 nach Fig. 7, einem Zwischenteil 15 nach Fig. 8, einem Dichtelement 20 nach Fig. 9, einem Eingriffsteil 12 nach Fig. 10 und einer Kappe 50 nach Fig. 11. Das Verbindungsteil 1 weist zwei im Abstand voneinander liegende Flansche 70 und 71 auf, welche mit einem z.B. in den Fig. 5 und 6 dargestellten Verriegelungsteil 62 zusammen wirken, d.h. in dieses einschiebbar sind.

Nach Fig. 7 a, b, c weist ein Zwischenbereich 5 des Verbindungselements 1 einen ersten Bereich I und einen zweiten Bereich II der Verrastungselemente 10 auf, wobei der erste Bereich I und der zweite Bereich II durch einen Zwischenhals 28 voneinander getrennt sind. Die beiden vorgenannten Bereiche sind jeweils als umlaufende Nut 32 und 34 ausgebildet.

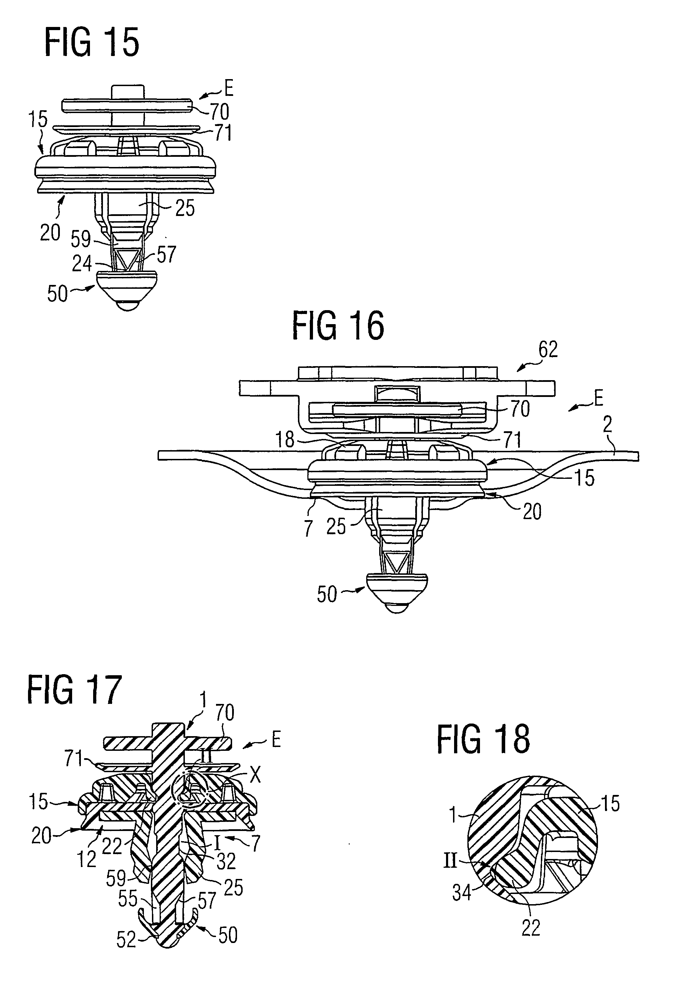

In der Vormontage V nach den Fig. 2 ,12 und 13 ist der erste Bereich I der Verrastungselemente 10 mit Gegenrastelementen 22 des Zwischenteils 15 Fig. 8 verriegelt, während in der Endmontage E Fig. 15 der zweite Bereich II mit den selben Gegenrastelementen 22 des Zwischenteils 15 eine Verriegelung erfährt. Gleichzeitig sind im Zustand der Endmontage E durch den Endbereich 4 Fig. 8 c des Verbindungselements 1 Spreizelemente 25 des Eingriffsteils 12 im Bereich der Trägeröffnung 7 gespreizt Fig. 17.

Die vormontierte Einheit V ist gemäß Fig. 1 bis 4 mit einem Verriegelungsteil 62 ausgestattet, welches in Fig. 5 und 6 näher dargestellt ist. Dieses Verriegelungsteil 62 weist einen Schlitz 65 auf, welcher zur Aufnahme des oberen Flansch 70 des Verriegelungsteils 1 dient. Der untere Flansch 71 lagert sich an der Unterseite des Verriegelungsteils 62 an. Oberseitig besitzt das Verriegelungsteil 62 mehrere spiralförmig verlaufende, an sich bekannte Halterippen 67.

In Fig. 7 ist das Verbindungselement 1 in Seitenansicht, in Draufsicht und im Mittelschnitt näher dargestellt. Wie ersichtlich, sind der erste Bereich I, d.h. die Nut 32 der Verrastungselemente 10 und der zweite Bereich II, d.h. die Nut 34 durch einen Zwischenhals 28 voneinander getrennt.

Unterseitig schließt sich an die Nut 32 eine ebene Fläche 59 an, so dass im Querschnitt in diesem Bereich ein Quadrat vorliegt, welches als Verdrehsicherung dient, so dass auch die Rastnasen 22 sich sauber hier einlagern können.

An die ebenen Flächen schließen vier Schrägen 57 an, welche in Einlagerungsbereiche 55 übergehen. Im Bereich dieser Einlagerungsbereiche befinden sich Stege 24; im Bereich oberhalb der Nut 34 sind Stege 30 vorgeshen.

Das Unterteil 4 des Verbindungselements 1, welches die Einlagerungsbereiche 55 begrenzt, ist mit einer Rast 52 ausgestattet.

In Fig. 8 a, b, und im Schnitt c-c ist das Zwischenteil 15 im einzelnen dargestellt. Dieses Zwischenteil 15 ist scheibenförmig ausgebildet mit einem Zentralbereich mit den Gegenrastelementen 22 und den zwischen angeordneten Schlitzen 31 Fig. 8 b im Bereich einer Durchtrittsöffnung 36 für den Zwischenbereich 5 des Verbindungselements 1. Weiterhin ist ein Umfangsbereich mit diagonal einander gegenüberliegenden Ausnehmungen 38 vorgesehen, welche als Verriegelungen für die Rastnasen 18 dienen. Zwischen den Ausnehmungen 38 des Zwischenteils 15 befinden sich Eingriffsbereiche 33 zum Einlagern mindestens einer Zunge 41 des in Fig. 9 näher dargestellten Dichtungselements.

In der Vormontage ist der erste Bereich I d.h. die Nut 32 des Verriegelungselements 1 mit den Gegenrastelementen 22 des Zwischenteils 15 verriegelt. In der Endmontage E greifen hingegen die Gegenrastelemente 22 des Zwischenteils 15 in den zweiten Bereich II, d.h. in die umlaufende Nut 34 der Verrastungselemente 10 des Verbindungsteils 1.

In Fig. 9 a, b, und im Schnitt c-c ist das vorerwähnte Dichtungselement 20 näher dargestellt. Es ist z.B. als Gummischeibe ausgebildet mit mindestens einer Zunge 41 und vier diagonal einander gegenüberliegenden Durchtrittsöffnungen 21 sowie einer mittleren Öffnung 27.

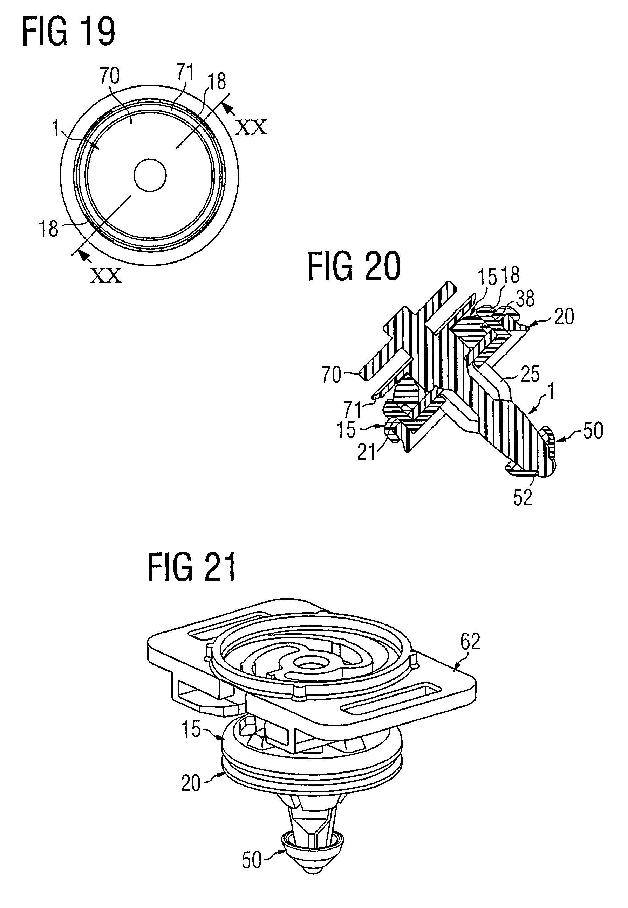

Fig. 10 zeigt das Eingriffsteil 12 in Seitenansicht, in Draufsicht und im Schnitt c-c. Dieses Eingriffsteil 12 weist z. B. vier diagonal einander gegenüberliegende Stege 18 auf, welche insbesondere nach Fig. 20 die Ausnehmungen 38 des Zwischenteils 15 hinter greifen und hinter diesen verriegelt sind.

Auf der Gegenseite besitzt das Eingriffsteil 12 z. B. vier diagonal einander gegenüberliegende Spreizelemente 25, welche konisch zulaufen und durch Schlitze voneinander getrennt sind. Diese Spreizelemente 25 des Eingriffsteils 12 lagern sich z.B. nach Fig. 2 und Fig. 7 in den Einlagerungsbereichen 55 des Verbindungselement 1 ein, und zwar bei der Vormontge V.

Im Zustand der Endmontage E hingegen werden diese Spreizelemente 25 durch die Schrägen 57 des Verbindungselements 1 gespreizt und liegen an den vier ebenen Flächen 59 des Verbindungselements 1 an, so dass sich eine Situation insbesondere nach Fig. 17 ergibt; damit ist die gesamte Vorrichtung funktionssicher in der Trägeröffnung 7 des Trägers 2 verriegelt.

Fig. 11 zeigt die Kappe 50 in Seitenansicht, in Draufsicht und im Schnitt c-c. Diese Kappe 50 weist eine Durchgangsöffnung 51 auf und läßt sich insbesondere gemäß den Fig. 1, 2, 4, 12, 17 und 20 mit dem Unterteil 4 des Verbindungselements 1 verriegeln. Die Umfangsbereiche der Kappe 50 umschließen hierbei gemäß den vorgenannten Fig. in der vormontierten Position F die unteren, äußeren Bereiche der Spreizelemente 25 des Eingriffsteils 12. Nach der Endmontage E liegen diesen vorgenannten Bereiche insbesondere gemäß Fig. 17 von der Umfangsfläche der Kappe 50 entfernt.

Nach Fig. 12 läßt sich die erfindungsgemäße Vorrichtung während der Vormontage V in die Trägeröffnung 7 des Trägers 2 einsetzen, d.h. die Spreizelemente 25 des Zwischenteils 12 sind noch nicht gespreizt. In dieser Position lagern sich insbesondere nach Fig. 13 und 14 die Gegenrastelemente 22 des Zwischenteils 15 in der Nut 32, d.h. im ersten Bereich I des Verbindungselements 1 ein. Zwischen der Unterseite des Flansches 71 des Verbindungselements 1 und der Oberseite des Zwischenteils 15 liegt ein Abstand a nach Fig. 12 vor.

Wird nun auf die erfindungsgemäße Vorrichtung gemäß Fig. 13 ein Druck P ausgeübt, so gelangen die Gegenrastelemente 22 aus dem Bereich I in den Bereich II des Verbindungsteils 1 analog Fig. 18. Damit lagern sich die Gegenrastelemente 22 in der Nut 34 des Verbindungsteils 1 ein. Gleichzeitig treten die Spreizelemente 25 des Eingriffsteils 12 aus den Einlagungsbereichen 55 über die Schräge 57 zu den ebenen Flächen 59 des Verbindungselements 1 und werden damit hinter der Öffnung 7 des Trägers 2 gespreizt. Diese Lage ist insbesondere in den Fig. 17 bis 20 näher dargestellt. Damit ist die gesamte Vorrichtung in der Endmontage E einwandfrei in der Trägeröffnung 7 des Trägers 2 verriegelt, so dass ein nicht näher dargestelltes Plattenelement, beispielsweise einer Wandverkleidung eines Kraftfahrzeuges, über das Verriegelungsteil 62 funktionssicher und effektiv mit dem Träger 2, beispielsweise einer Tür eines Kraftfahrzeuges verbunden ist.

Das Dichtelement 20 beaufschlagt in dieser Position die Oberseite des Trägers 2 und dichtet damit einwandfrei die Trägeröffnung 7 ab. Die gesamte Einheit ist funktionssicher miteinander verriegelt, und zwar unabhängig von der Dicke des Trägers 2.

Soll die erfindungsgemäße Vorrichtung wieder demontiert werden, so ist eine Zugwirkung aus das Verriegelungsteil 62 auszuüben, wodurch die Gegenrastelemente 22 des Zwischenteils 15 aus dem Bereich II des Verbindungselements 1 austreten und in den Bereich I gelangen. Gleichzeitig wird die Spreizung der Spreizelemente 25 aufgehoben und diese lagern sich gemäß Fig. 2 wieder in die Einlagerungsbereiche 55 des Verbindungsteils 1 ein. Die gesamte Vorrichtung kann damit aus der Trägeröffnung 7 entnommen werden, da der Außenumfang der Spreizelemente 25 nicht größer ist als der Außenumfang der Dichtkappe 50 siehe insbesondere Fig. 2 und 13.

Die gesamte Vorrichtung ist einfach aufgebaut und weist eine hohe Effektivität auf, wobei insbesondere eine mehrmalige Montage bzw. Demontage möglich ist, ohne das einzelne Teile zerstört werden müssen. Es ergibt sich der Vorteil einer genauen Einstellung der Ein- und Abzugskräfte, so dass eine sehr gute Feinabstimmung gewährleistet ist. Damit sind die vorgenannten Kräfte von der Dicke des Trägermaterials unabhängig.

## Patentansprüche

1. Vorrichtung zur Verbindung eines Trägers (2), insbesondere eines Karosserieteils eines Kraftfahrzeuges, mit einem Plattenelement, insbesondere einer Tür- oder Wandverkleidung,
mit einem Verbindungselement (1) mit an dem Plattenelement befestigbarem Oberteil (3) und einem mit dem Träger (2) verbindbaren Unterteil (4),
wobei zwischen dem Oberteil (3) und dem Unterteil (4) ein mit Verrastungselementen (10) versehener, halsförmig ausgebildeter Zwischenbereich (5) vorgesehen ist, welcher ein in eine Trägeröffnung (7) einlagerbares Eingriffsteil (12) durchsetzt,
wobei der Zwischenbereich (5) oberhalb des Trägers (2) von einem Zwischenteil (15) umgeben ist, welches mit den Verrastungselementen (10) verriegelbar ist und
wobei der Zwischenbereich (5) des Verbindungselements (1) einen ersten Bereich (I) und einen zweiten Bereich (II) der Verrastungselemente (10) aufweist, in der Vormontage der erste Bereich (I) und in der Endmontage der zweite Bereich (II) der Verrastungselemente (10) mit Gegenrastelementen (22) des Zwischenteiles ( 15) verriegelt ist und
in der Endmontage (E) durch den Endbereich (4) des Verbindungselements (1) gleichzeitig Spreizelemente (25) des Eingriffsteils (12) im Bereich der Trägeröffnung (7) gespreizt sind,
wobei der erste und der zweite Bereich (I, II) der Verrastungselemente (10) jeweils als umlaufende Nut (32, 34) ausgebildet ist und
der erste und der zweite Bereich (I, II) der Verrastungselemente (10) durch einen Zwischenhals (28) voneinander getrennt sind,
**dadurch gekennzeichnet,**
**dass** zwischen dem Zwischenteil (15) und dem Eingriffsteil (12) ein die Oberseite des Trägers (2) beaufschlagendes Dichtelement (20) angeordnet ist und
**dass** das Verbindungselement (1) mindestens zwei diagonal einander gegenüberliegende Stege (30) aufweist, welche in der Endmontage (E) in Schlitzen (31) des Zwischenteils (15) eingelagert sind.

2. Vorrichtung nach Anspruch 1, **dadurch gekennzeichnet, dass** das Zwischenteil (15) scheibenförmig ausgebildet ist mit einem Zentralbereich mit den Gegenrastelementen (22) und den dazwischen angeordneten Schlitzen (31) im Bereich einer Durchtrittsöffnung (36) für den Zwischenbereich (5) des Verbindungselements (1) und mit einem Umfangsbereich mit diagonal einander gegenüberliegenden Ausnehmungen (38) (Fig. 8a-8c).

3. Verbindungselement nach Anspruch 1, **dadurch gekennzeichnet, dass** an dem Unterteil (4) des Verbindungselements (1) endseitig eine Kappe (50) befestigt ist.

4. Vorrichtung nach Anspruch 3, **dadurch gekennzeichnet, dass** die Kappe (50) in einer Rast (52) des Unterteils (4) eingeclipt ist.

5. Vorrichtung nach Anspruch 4, **dadurch gekennzeichnet, dass** das Unterteil (4) des Verbindungselements (1) hinter der Rast (52) Einlagerungsbereiche (55) für die Spreizelemente (25) des Eingriffsteils (12) in der Vormontage (V) aufweist (Fig. 13).

6. Vorrichtung nach Anspruch 5, **dadurch gekennzeichnet, dass** die Einlagerungsbereiche (55) des Unterteils (4) des Verbindungselements (1) durch Stege (24) voneinander getrennt sind.

7. Vorrichtung nach Anspruch 6, **dadurch gekennzeichnet, dass** an die Einlagerungsbereiche (55) des Unterteils (4) konisch zulaufende Schrägen (57) anschließen zum Spreizen der Spreizelemente (25) des Eingriffsteils (12) bei der Bewegung des Verbindungselements (1) von der Vormontage (V) in die Endmontage (E). (Fig. 17).

8. Vorrichtung nach Anspruch 7, **dadurch gekennzeichnet, dass** in der Endmontage (E) die gespreizten Spreizelemente (25) an ebenen Flächen (59) des Unterteils (4) des Verbindungselements (1) anliegen.

9. Vorrichtung nach einem oder mehreren der vorhergehenden Anprüche, **dadurch gekennzeichnet, dass** das Eingriffsteil (12) oberhalb der Spreizelemente (25) Stege (18) aufweist, welche in die Ausnehmungen (38) des Zwischenteils (15) einlagerbar sind.

10. Vorrichtung nach Anspruch 9, **dadurch gekennzeichnet, dass** zwischen den Ausnehmungen (38) des Zwischenteils (15) Eingriffsbereiche (33) zum Einlagern mindestens einer Zunge (41) des Dichtelements (20) in der Vorund Endmontage (V; E) angeordnet sind.

11. Vorrichtung nach Anspruch 9 und 10, **dadurch gekennzeichnet, dass** das Dichtelement (20) Durchtrittsöffnungen (21) für die stege (18) des Eingriffsteils (12) aufweist.

## Claims

1. Device for connecting a support (2), in particular a body part of a motor vehicle, to a panel element, in particular a door covering or wall covering,
having a connecting element (1) with an upper part (3) which can be fastened to the panel element, and a lower part (4) which can be connected to the support (2),
an intermediate region (5) which is of neck-shaped design and is provided with latching elements (10) being provided between the upper part (3) and the lower part (4) and having an engagement part (12), which can be embedded in a support opening (7), passing through it,
the intermediate region (5) above the support (2) being surrounded by an intermediate part (15) which can be locked to the latching elements (10), and
the intermediate region (5) of the connecting element (1) having a first region (I) and a second region (II) of the latching elements (10), in the preassembly stage the first region (I) and in the final assembly stage the second region (II) of the latching elements (10) being locked to mating latching elements (22) of the intermediate part (15), and
in the final assembly stage (E), the end region (4) of the connecting element (1) at the same time causing expanding elements (25) of the engagement part (12) to expand in the region of the support opening (7),
the first and the second region (I, II) of the latching elements (10) being designed in each case as an encircling groove (32, 34), and
the first and the second region (I, II) of the latching elements (10) being separated from each other by an intermediate neck (28),
**characterized**
**in that** a sealing element (20) which acts upon the upper side of the support (2) is arranged between the intermediate part (15) and the engagement part (12), and
**in that** the connecting element (1) has at least two diagonally mutually opposite webs (30) which, in the final assembly stage (E), are embedded in slots (31) of the intermediate part (15).

2. Device according to Claim 1, **characterized in that** the intermediate part (15) is of disc-shaped design with a central region having the mating latching elements (22) and the slots (31), which are arranged in-between, in the region of a passage opening (36) for the intermediate region (5) of the connecting element (1), and with a circumferential region with diagonally mutually opposite recesses (38) (Figs. 8a-8c).

3. Connecting element according to Claim 1, **characterized in that** a cap (50) is fastened on the end side of the lower part (4) of the connecting element (1).

4. Device according to Claim 3, **characterized in that** the cap (50) is clipped in a latch (52) of the lower part (4).

5. Device according to Claim 4, **characterized in that** the lower part (4) of the connecting element (1) has, behind the latch (52), embedding regions (55) for the expanding elements (25) of the engagement part (12) in the preassembly stage (V) (Fig. 13).

6. Device according to Claim 5, **characterized in that** the embedding regions (55) of the lower part (4) of the connecting element (1) are separated from one another by means of webs (24).

7. Device according to Claim 6, **characterized in that** conically tapering slopes (57) adjoin the embedding regions (55) of the lower part (4) and are intended for expanding the expanding elements (25) of the engagement part (12) during the movement of the connecting element (1) from the preassembly stage (V) into the final assembly stage (E). (Fig. 17).

8. Device according to Claim 7, **characterized in that**, in the final assembly stage (E), the expanded expanding elements (25) bear against planar surfaces (59) of the lower part (4) of the connecting element (1).

9. Device according to one or more of the preceding claims, **characterized in that** the engagement part (12) has, above the expanding elements (25), webs (18) which can be embedded in the recesses (38) of the intermediate part (15).

10. Device according to Claim 9, **characterized in that** engagement regions (33) for the embedding of at least one tongue (41) of the sealing element (20) in the preassembly and final assembly stages (V; E) are arranged between the recesses (38) of,the intermediate part (15).

11. Device according to Claims 9 and 10, **characterized in that** the sealing element (20) has passage openings (21) for the webs (18) of the engagement part (12).

## Revendications

1. Dispositif pour relier un support (2), en particulier une partie de carrosserie de véhicule automobile à un élément en plaque, en particulier un habillage d'une porte ou d'une paroi,
doté d'un élément de liaison (1) comprenant une partie supérieure (3) destinée à être fixer à l'élément en plaque et une partie inférieure (4) destinée à être fixée au support (2),
dans lequel entre la partie supérieure (3) et la partie inférieure (4) une partie intermédiaire (5), conçue en forme de gorge et dotée d'éléments d'encliquetage (10) est prévue, laquelle partie intermédiaire traverse une pièce d'accrochage (12) pouvant être insérée dans une ouverture (7) du support,
dans lequel la partie intermédiaire (5) au dessus du support (2) est entourée d'une pièce intermédiaire (15) pouvant se verrouiller avec les éléments d'encliquetage (10) et
dans lequel la partie intermédiaire (5) de l'élément de liaison (1) présente une première zone (I) et une deuxième zone (II) des éléments d'encliquetage (10), la première zone (I) dans le prémontage et la deuxième zone (II) dans le montage final des éléments d'encliquetage (10) étant verrouillée avec des éléments d'encliquetage conjugués (22) de la pièce intermédiaire (15), et
dans le montage final (E), au travers de la zone d'extrémité (4) de l'élément de liaison (1), des éléments d'écartements (25) de la pièce d'accrochage (12) s'écartent simultanément dans la zone de l'ouverture du support (7),
dans lequel la première et la seconde zone (I, II) des éléments d'encliquetage (10) sont formées chacune d'une rainure circulaire (32, 34) et
la première et la seconde zone (I, II) des éléments d'encliquetage (10) sont séparées l'une de l'autre par une gorge intermédiaire (28),
**caractérisé en ce que**,
entre la pièce intermédiaire (15) et la pièce d'accrochage (12) est disposé un élément d'étanchéité (20), coiffant la face supérieure du support (2), et
**en ce que** l'élément de liaison (1) présente au moins deux nervures (30) disposées en diagonales l'une par rapport à l'autre, qui lors du montage final (E) sont logées dans des fentes (31) de la pièce intermédiaire (15).

2. Dispositif selon la revendication 1, **caractérisé en ce que** la pièce intermédiaire (15) est conçue en forme de disque avec, dans une zone centrale, les éléments d'encliquetage conjugués (22), entres lesquels sont positionnées les fentes (31) au niveau d'une ouverture de passage (36) pour la partie intermédiaire (5) de l'élément de liaison (1) et avec une partie périphérique comprenant des creux (38) disposés en diagonale les uns par rapport aux autres (fig. 8a-8c).

3. Elément de liaison selon la revendication 1, **caractérisé en ce qu'** un capuchon (50) est fixé à l'extrémité de la partie inférieure (4) de l'élément de liaison (1).

4. Dispositif selon la revendication 3, **caractérisé en ce que** le capuchon (50) est encliqueté dans une encoche (52) de la partie inférieure (4).

5. Dispositif selon la revendication 4, **caractérisé en ce que** la partie inférieure (4) de l'élément de liaison (1) présente, derrière l'encoche (52), des logements (55) pour les éléments d'écartement (25) de la pièce d'accrochage (12) en position de prémontage (V) (fig.13).

6. Dispositif selon la revendication 5, **caractérisé en ce que** les logements (55) de la partie inférieure (4) de l'élément de liaison (1) sont séparés les uns des autres par des nervures (24).

7. Dispositif selon la revendication 6, **caractérisé en ce qu'**aux logements (55) de la partie inférieure (4) succèdent des pentes coniques susceptibles d'écarter les éléments d'écartement (25) de la pièce d'accrochage (12) lors du déplacement de l'élément de liaison (1) de la position de prémontage (V) dans la position de montage final (E) (fig.17).

8. Dispositif selon la revendication 7, **caractérisé en ce que**, dans le montage final (E), les éléments d'écartement (25) écartés portent sur des surfaces planes (59) de la partie inférieure (4) de l'élément de liaison (1).

9. Dispositif selon l'une ou plusieurs des revendications précédentes **caractérisé en ce que** la pièce d'accrochage (12) présente, au dessus des éléments d'écartement (25) des saillies (18) pouvant se loger dans les creux (38) de la pièce intermédiaire (15).

10. Dispositif selon la revendication 9, **caractérisé en ce que**, entre les creux (38) de la pièce intermédiaire (15), se trouvent des zones d'accrochage (33) pour loger au moins un ergot (41) de la pièce d'étanchéité (20) lors du prémontage (V) et du montage final (E).

11. Dispositif selon la revendication 9 et 10, **caractérisé en ce que** la pièce d'étanchéité (20) présente des ouvertures de passage (21) pour les saillies (18) de la pièce d'accrochage (12).
